# EUROPEAN PATENT SPECIFICATION

(11) **EP 1 704 360 B1**
(45) Date of publication and mention of the grant of the patent: **23.04.2008**
(21) Application number: 04808882.7
(22) Date of filing: 15.12.2004
(51) Int. Cl.: F16L 55/128

(54) **A PLUG TRAIN**
STOPFENZUG
TRAIN D'OBTURATION

(30) Priority: 17.12.2003 NO 20035644
(43) Date of publication of application: 27.09.2006
(73) Proprietor: TDW Offshore Services AS, 4033 Stavanger (NO)
(72) Inventor: SYSE, Harald, N-4052 ROYNEBERG (NO)
(74) Representative: Briddes, Sam
(86) International application number: PCT/NO2004/000388
(87) International publication number: WO 2005/059429

(56) References cited:
- DE-C1- 19 514 865
- GB-A- 2 265 433
- US-A- 4 941 511
- PATENT ABSTRACTS OF JAPAN vol. 013, no. 473 (M-884), 26 October 1989 (1989-10-26) & JP 01 186462 A (CHUGOKU ELECTRIC POWER CO INC:THE), 25 July 1989 (1989-07-25)

## Description

The invention concerns a plug train in accordance with the preamble of the independent claim 1.

The need for maintaining, repairing and extending a pipeline without having to shut down the pipeline has initiated the provision of an arrangement such as a plug train. A plug train in accordance with the invention, is to be placed inside a pipe or pipeline to be able to shut off or isolate at least a portion of the pipeline.

The plug train is constituted by several plug modules, at least two plug modules, and also modules such as a control module and a back up monitoring module. Each plug module is set against the inner surface of the pipeline by the controlled reduction of the length of the plug module, and the subsequent placing of the fixing devices and sealing devices against the inner surface of the pipeline.

In accordance with prior art the plug modules had to be set in a pre-set sequence, as the movement of the plug module not yet set will be restricted by the set plug module, due to the reduction of the length of each plug module when setting the plug train. For carrying out the setting of such a plug train an annulus bleed off system would be necessary.

A system wherein the sequence of setting the plug modules is arbitrary is described in NO 20023100. NO 20023100 discloses a plug train where the reduction of the length of the plug modules and the following setting of the plug modules against the inner walls of the pipeline, is controlled by a cylinder with a through piston. By the provision of the through pistons, the length of the plug train is to be kept invariable during the setting of the plug train. Which plug module to be set first and last is optional to the skilled person. This arbitrary setting of the plug modules makes an annulus bleed off system superfluous.

The document JP 01186462 also discloses a plug train.

The object of the invention is to provide an arrangement for a plug train according to claim 1.

In accordance with the claimed invention this alternative technical solution does not make use of a through piston in the plug module, but concerns a connector arranged between two plug modules, which connector enables the plug modules to move axially relative to each other.

The connector may be constituted by different devices and arrangements such as a telescopic device, a cylinder and a piston which may be pre-tensioned, a spring element for instance a extension spring or a compression spring, a device with features such as a scissor type axel jack, an elastic wire, a rubber band etc. The skilled person will understand that any device which is capable of rendering movement, preferably axial movement, between the two plug modules may constitute the connector.

If the plug train comprises two plug modules, the connector is placed between the two plug modules. If the plug train comprises more than two plug modules, the connector is placed between two by two plug modules. The connector being joined to the two facing end surfaces of the two plug modules respectively.

In the following one embodiment of the invention will be explained with references to the figures showing the invention in detail, wherein

Figure 1 shows two plug modules to be set in a pipeline, where the two plug modules are joined by a connector.

Figure 2 shows the two plug modules and the connector in Figure 1, where the plug modules are set against the inner surface of the pipeline and the connector is extended.

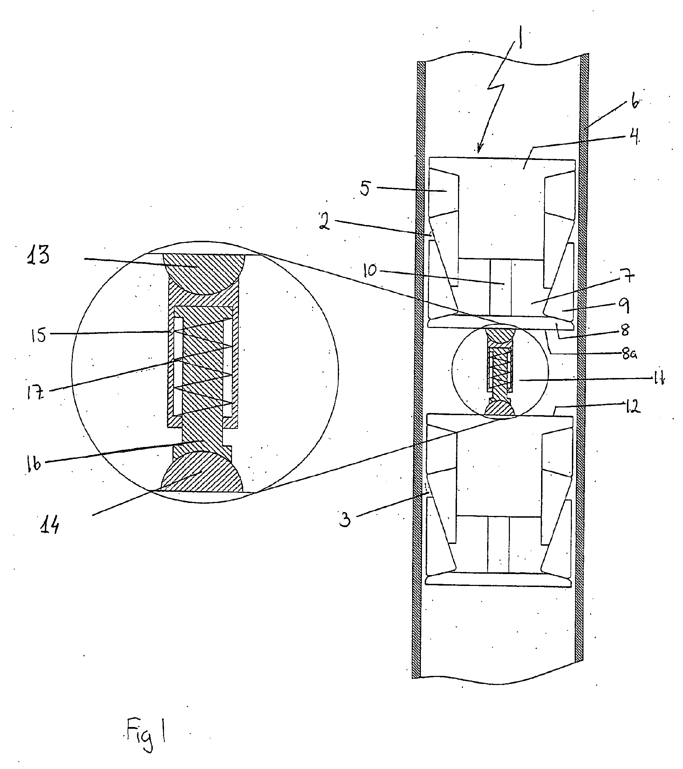

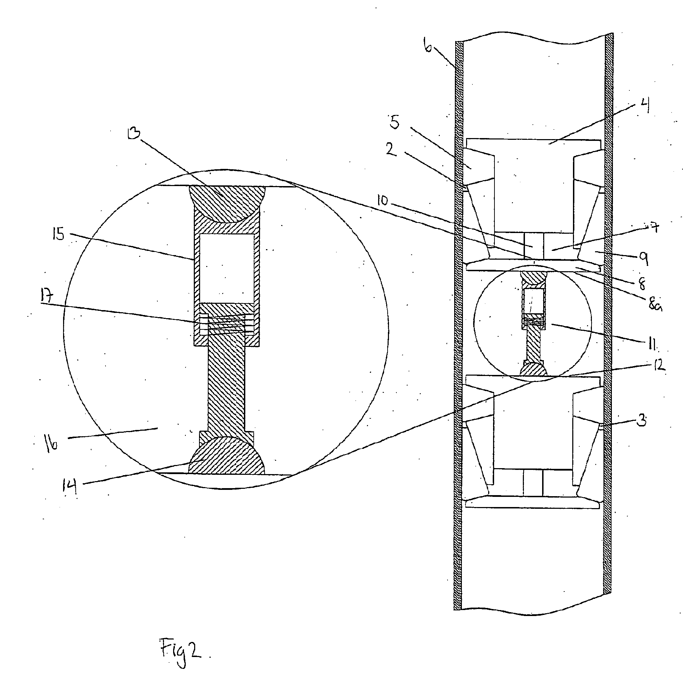

A plug train 1 is shown in figure 1 and 2 by two plug modules 2, 3. The plug modules 2, 3 each comprises a first section 4 which is provided with fixing devices 5 to be set against the inner surface of the pipeline 6. The second section 7 comprises a plate 8 arranged with an end surface 8a and a seal unit 9 which, also is to be set against the inner wall of the pipeline 6. Each plug module is provided with a hydraulic cylinder wherein the piston 10 of the hydraulic cylinder is connected to the plate 8.

The setting or the releasing of each plug module 2, 3 is to be carried out, by moving the end surfaces of each plug module 2, 3 towards each other or away from each other respectively by means of the hydraulic cylinder. During the setting of the plug module 2, 3, the length of plug module is reduced, and the fixing devices 5 and the seal unit 9 is placed against the inner wall of the pipeline 6. During the release of each plug module 2, 3 the length of the plug module is increased and the seal unit 9 and the fixing devices 5 is released from engagement with the inner wall of the pipeline 6.

To be able to set and release the plug modules 2,3 in an optionally sequence a connector 11, which is capable of axial displacement, is connected to the facing end surfaces 8a, 12 of the two plug modules 2, 3. An universal joint 13, 14 is provided at each end of the connector 11 joining the connector 11 to each of the two facing end surfaces 8a, 12. In an alternative embodiment of the invention alternative attachment devices for fixing the connector 11 to the two facing end surfaces 8a, 12 may be provided. These attachment devices may comprise a combination of an universal movable joint and rigid joints.

The connector 11 comprises a telescopic device such as a cylinder 15 and a piston 16. One end of the piston 16 is joined to the end surface 12 by means of the universal joint 14. The other end of the piston 16 is accommodated in the cavity of the cylinder 15, and the cylinder 15 is connected to the two facing end surface 8a by means of the universal joint 13. The piston 16 is pre-tensioned in the cavity of the cylinder 15 for instance by a spring 17 arranged around the piston rod. Other means than a spring may provide the pre-tension. The cavity of the cylinder may for instance be pressurized with a medium such as nitrogen or other suitable gases.

In figure 1 a larger portion of the piston 16 is accommodated in the cavity of the cylinder and kept in this position by the pre-tensioned spring 17. The plug modules 2, 3 are shown released from contact with the inner wall of the pipeline 6. In figure 2 either plug module 2 or plug module 3 has been set first with the following setting of the other of the plug modules 2, 3. The piston 16 is moved in the cavity of the cylinder 15 and thereby compressing the spring 17 as a result of the length reduction of either plug module 2 or plug module 3.

## Claims

1. A plug train to shut off or isolate at least a portion of the pipeline, which plug train (1) comprises at least two plug modules (2,3),
wherein each plug module (2,3) is setable against the inner surface (6) of the pipeline by moving the end surfaces of the plug module(2,3) towards each other, thereby obtaining a controlled reduction of the length of the plug module (2,3), wherein the reduction of length of the plug module (2,3) causes the subsequent placing of the fixing devices and sealing devices against the inner surface (6) of the pipeline,
or releasable from the inner surface of the pipeline by moving the end surfaces of the plug module (2,3) away from each other, thereby obtaining a controlled increase of the length of the plug module (2,3), wherein the increase of the length of the plug module (2,3) causes the subsequent removing of the fixing devices and sealing devices from the inner surface (6) of the pipeline,
the plug modules (2,3) are joined together by connectors (11), each connector (11) being placed between the two by two plug modules (2,3), where each connector (11) is connected to the two facing end surfaces of the two plug modules (2,3) respectively, and that the connector (11) is provided to render relative axial movement between the two plug modules (2,3),
**characterized in that** at a joint is provided at each end of the connector (11) fixing the connector (11) to each of the two facing end surfaces where at least one of the joints is a universal movable joint.

2. A plug train according to claim 1,
**characterized in that** a hydraulic cylinder is provided in each plug module (2,3) to be able to move the end surfaces of the plug module (2,3).

3. A plug train according to one of the claims 1-2,
**characterized in that** the connector (11) is a spring element.

4. A plug train according to one of the claims 1-2,
**characterized in that** the connector (11) is an elastic wire, rubber band.

5. A plug train according to one of the claims 1-2,
**characterized in that** the connector (11) is a telescopic device.

6. A plug train according to one of the claims 1-2,
**characterized in that** the connector (11) comprises a cylinder (15) and a piston (16), wherein one end of the piston (16) being joined to one of the two facing end surfaces, and the other end of the piston being accommodated in the cavity of the cylinder (15), which cylinder (15) being connected to the other of the two facing end surfaces.

7. A plug train according to claim 6,
**characterized in that** the piston (16) is pre-tensioned in the cavity of the cylinder (15) for instance by a spring (17) arranged around the piston rod.

## Patentansprüche

1. Versehlussstopfenstrang zum Absperren oder Abtrennen zumindest eines Abschnitts einer Rohrleitung, welcher Verschlusstopfenstrang (1) mindestens zwei Verschlussstopfenmodule (2, 3) umfasst, wobei jedes Verschlussstopfenmodul (2, 3) an der Innenfläche (6) der Rohrleitung anliegend eingesetzt werden kann, indem die Stirnflächen des Verschlussstopfenmoduls (2, 3) aufeinander zu bewegt werden, wodurch eine gesteuerte Reduktion der Länge des Verschlussstopfenmoduls (2, 3) erzielt wird, wobei die Reduktion der Länge des Verschlussstopfenmoduls (2, 3) das anschließend Platzieren der Befestigungsvorrichtungen und Abdichtvorrichtungen an der Innenfläche (6) der Rohrleitung anliegend bewirkt,
oder von der Innenfläche der Rohrleitung aus rückgängig gefacht werden kann, indem die Stirnflächen des Vcrschlussstopfenmoduls (2, 3) voneinander weg bewegt werden, wodurch eine gesteuerte Zunahme der Länge des Verschlussstopfenmoduls (2, 3) erzielt wird, wobei die Zunahme der Länge des Verschlussstopfenmoduls (2, 3) die anschließende Entfernung der Befestigungsvorrichtungen und Abdichtvorrichtungen von der Innenfläche (6) der Rohrleitung bewirkt,
wobei die Verschlussstopfenmodule (2, 3) durch Verbinder (11) miteinander verbunden sind, wobei jeder Verbinder (11) zwischen den paarweise angeordneten Verschlussstopfenmodulcn (2, 3) eingesetzt ist, wobei der Verbinder (11) an die beiden einander zugewandten Stirnflächen der jeweils zwei Verschlussstopfenmodule (2, 3) angeschlossen ist, und der Verbinder (11) vorgesehen ist, um eine relative axiale Bewegung zwischen den beiden Verschlussstopfenmodulen (2, 3) zu bewerkstelligen,
**dadurch gekennzeichnet, dass** eine Gelenkverbindung an jedem Ende des Verbinders (11) vorgesehen ist, die den Verbinder (11) an jeder der beiden einander zugewandten Stirnflächen befestigt, wobei mindestens eine der Gelenkvcrbindungen ein bewegliche Universalgelenk ist.

2. Vetschlussstopfenstrang nach Anspruch 1,
**dadurch gekennzeichnet, dass** ein Hydraulikzylinder in jedem Verschlussstupfenmodul (2, 3) vorgesehen ist, um die Stirnflächen des Vcrschlussstopfenmoduls (2, 3) bewegen zu können.

3. Verschlussstopfenstrang nach Anspruch 1. oder 2,
**dadurch gekennzeichnet, dass** der Verbinder (11) ein Federelement ist.

4. Verschlussstopfenstrang nach Anspruch 1. oder 2,
**dadurch gekennzeichnet, dass** der Verbinder (11) ein elastischer Draht oder ein Gummiband ist.

5. Verschlussstopfenstrang nach Anspruch 1 oder 2,
**dadurch gekennzeichet, dass** der Verbinder (11) eine Teleskopvorrichtung ist.

6. Vetschlussstopfenstrang nach Anspruch 1 oder 2,
**dadurch gekennzeichnet, dass** der Verbinder (11) einen Zylinder (15) und einen Kolben (16) umfasst, wobei ein Ende des Kolbens (16) an eine der beiden einander zugewandten Stirnflächen angeschlossen ist, und das andere Ende des Kolbens im Hohlraum des Zylinders (15) untergebracht ist, wobei der Zylinder (15) an die andere der beiden einander zugewandten Stirnflächen angeschlossen ist.

7. Verschlussstopfenstrang nach Anspruch 6,
**dadurch gekennzeichnet, dass** der Kolben (16) im Hohlraum des Zylinders (15) zum Beispiel durch eine um die Kolbenstange, angeordnete Feder (17) vorgespannt ist.

## Revendications

1. Train de prises pour couper ou isoler au moins une partie du pipeline, lequel train de prises (1) comprend au moins deux modules de prises (2, 3),
dans lequel chaque module de prises (2, 3) repose contre la surface intérieure (6) du pipeline en rapprochant les surfaces d'extrémité du module de prises (2, 3) l'une de l'autre, permettant ainsi d'obtenir une réduction contrôlée de la longueur du module de prises (2, 3), dans lequel la réduction de la longueur du module de prises (2, 3) entraîne le placement ultérieur des dispositifs de fixation et des dispositifs d'étanchéité contre la surface intérieure (6) du pipeline,
ou une séparation de la surface intérieure du pipeline en éloignant les surfaces d'extrémité du module de prises (2, 3) l'une de l'autre, permettant ainsi d'obtenir une augmentation contrôlée de la longueur du module de prises (2, 3), dans lequel l'augmentation de la longueur du module de prises (2, 3) entraîne le retrait ultérieur des dispositifs de fixation et des dispositifs d'étanchéité de la surface intérieure (6) du pipeline,
les modules de prises (2, 3) sont raccordés à l'aide de connecteurs (11), chaque connecteur (11) étant placé entre les deux par deux modules de prises (2, 3), où chaque connecteur (11) est connecté aux deux surfaces d'extrémité se faisant face des deux modules de prises (2, 3) respectivement, et en ce que le connecteur (11) est prévu pour entraîner un mouvement axial relatif entre les deux modules de prises (2, 3),
**caractérisé en ce qu'**un joint est prévu à chaque extrémité du connecteur (11) fixant le connecteur (11) à chacune des deux surfaces d'extrémité se faisant face où au moins un des joints est un joint mobile universel.

2. Train de prises selon la revendication 1, **caractérisé en ce qu'**un vérin hydraulique est prévu dans chaque module de prises (2, 3) pour pouvoir déplacer les surfaces d'extrémité du module de prises (2, 3).

3. Train de prises selon l'une quelconque des revendications 1 à 2, **caractérisé en ce que** le connecteur (11) est un élément élastique.

4. Train de prises selon l'une quelconque des revendications 1 à 2, **caractérisé en ce que** le connecteur (11) est une bande en caoutchouc de fil élastique.

5. Train de prises selon l'une quelconque des revendications 1 à 2, **caractérisé en ce que** le connecteur (11) est un dispositif télescopique.

6. Train de prises selon l'une quelconque des revendications 1 à 2, **caractérisé en ce que** le connecteur (11) comprend un vérin (15) et un piston (16), dans lequel une extrémité du piston (16) est raccordée à l'une des deux surfaces d'extrémité se faisant face, et l'autre extrémité du piston étant accueillie dans la cavité du vérin (15), lequel vérin (15) est raccordé à l'autre des deux surfaces d'extrémité se faisant face.

7. Train de prises selon la revendication 6, **caractérisé en ce que** le piston (16) est prétendu dans la cavité du vérin (15), par exemple à l'aide d'un ressort (17), disposé autour de la tige de piston.
